(19) Europäisches Patentamt
European Patent Office
Office européen des brevets

(11) **EP 1 271 393 B1**

(12) **FASCICULE DE BREVET EUROPEEN**

(45) Date de publication et mention
de la délivrance du brevet:
**20.04.2005 Bulletin 2005/16**

(51) Int Cl.⁷: **G06K 9/22**, H04N 1/107

(21) Numéro de dépôt: **01401674.5**

(22) Date de dépôt: **25.06.2001**

(54) **Photostyle**

Lichtgriffel

Lightpen

(84) Etats contractants désignés:
**CH DE FR GB LI SE**

(43) Date de publication de la demande:
**02.01.2003 Bulletin 2003/01**

(73) Titulaire: **CSEM
Centre Suisse d'Electronique et de
Microtechnique S.A. - Recherche et
Développement
2007 Neuchâtel (CH)**

(72) Inventeur: **Franzi, Edoardo
1400 Yverdon-les-Bains (CH)**

(74) Mandataire: **Caron, Gérard et al
Cabinet JP Colas
37 avenue Franklin D. Roosevelt
75008 Paris (FR)**

(56) Documents cités:
**WO-A-97/15896          WO-A-98/20446**

**Description**

La présente invention est relative aux photostyles permettant par balayage manuel d'une image d'introduire de l'information dans un ordinateur et éventuellement d'afficher cette information sur l'écran de visualisation de celui-ci.

De tels photostyles présentent en général un état de veille et un état actif selon leur degré d'éloignement du support de l'image à explorer, l'état actif n'étant enclenché que lorsque le style se trouve à une distance suffisante du support pour que l'image puisse correctement être acquise par les circuits électroniques du photostyle.

La transition entre les deux états est commandée de façon connue par des moyens mécaniques enclenchant le capteur optoélectronique d'acquisition du photostyle seulement lorsqu'un contact physique avec le support d'image est détecté. Par exemple, il est connu de monter à l'extrémité du photostyle un petit cylindre rotatif associé à un détecteur de mouvement qui commande l'état actif lorsqu'il est mis en mouvement par contact avec le support d'image, c'est-à-dire lorsque l'utilisateur commence à balayer l'information à acquérir.

Une telle réalisation mécanique des moyens de commande de transition entre les états de fonctionnement du photostyle est sujette à des défaillances, et en raison de sa complexité, relativement coûteuse à fabriquer. L'invention a pour but de fournir un photostyle du type général rappelé ci-dessus qui soit dépourvu de ces inconvénients.

Publication internationale WO97/15896 divulgue un photostyle qui passe de l'état de veille à l'état actif dès qu'un élément photosensible mesure suffisamment de lumière retrodiffusée, et sans utiliser des moyens mécaniques.

L'invention a donc pour objet un photostyle conforme aux caractéristiques de la revendication 1.

Grâce à ces caractéristiques, le photostyle peut être commandé de l'état de veille à l'état actif et vice-versa uniquement par des moyens électroniques ce qui élimine tout facteur d'usure mécanique au cours du fonctionnement, et implique une fabrication à moindre coût.

D'autres particularités avantageuses de l'invention sont définies dans les sous-revendications 2 à 9.

D'autres caractéristiques et avantages de la présente invention apparaîtront au cours de la description qui va suivre, donnée uniquement à titre d'exemple et faite en se référant aux dessins annexés sur lesquels:

- la figure 1 est un schéma symbolique d'un photostyle selon l'invention;
- la figure 2 est un diagramme illustrant comment est établie la transition entre l'état de veille et l'état actif du photostyle selon l'invention;
- les figures 3A et 3B sont des diagrammes de l'évolution d'une tension en fonction du temps pour illustrer comment est établie pendant l'état de veille la transition entre un état inactif et un état d'attente du photostyle suivant l'invention;
- la figure 4 est un organigramme très simplifié du processus de déclenchement de l'état actif du photostyle selon l'invention.

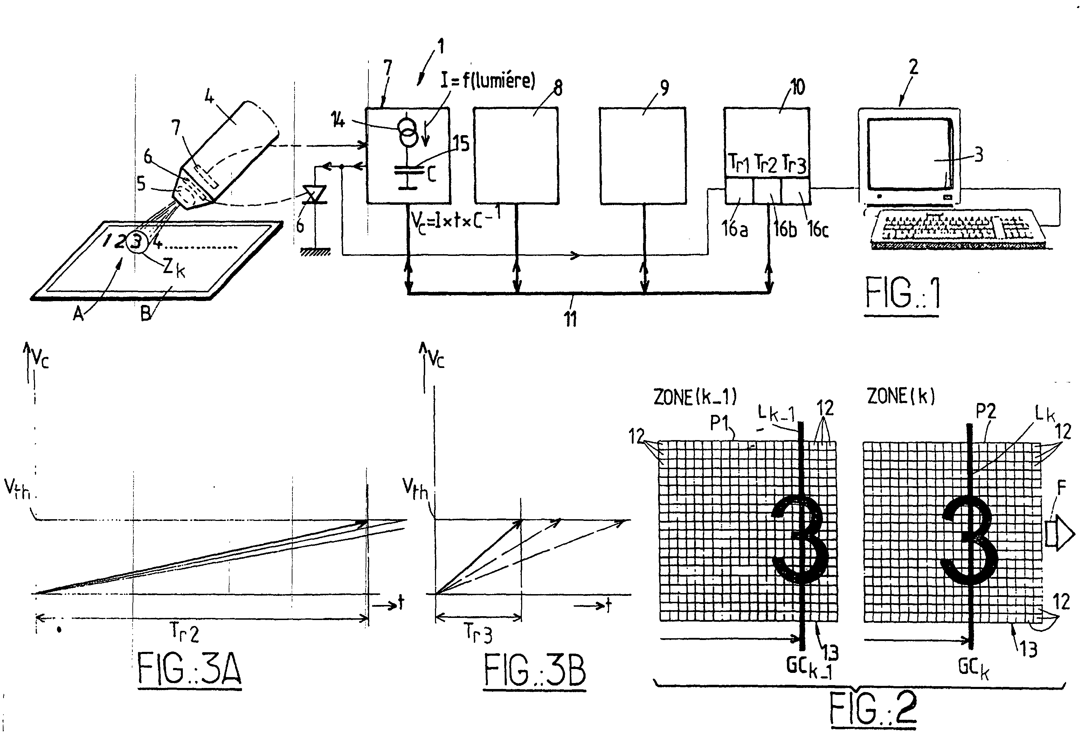

Sur la figure 1, le photostyle 1 selon l'invention est supposé devoir lire par balayage manuel une image A se trouvant sur un support d'image B. L'image peut avoir un contenu quelconque. Par exemple, elle peut être composée d'éléments d'image alphanumériques, comme représenté, ou graphiques, son contenu proprement dit n'ayant pas un lien direct avec l'invention.

L'information d'image acquise par le photostyle 1 se présente sous forme numérisée et elle peut être introduite dans un ordinateur 2 sur l'écran 3 duquel elle peut être visualisée. Bien entendu, tout autre usage de l'information numérisée d'image acquise par le photostyle 1 peut être envisagé.

Le photostyle 1 comprend un boîtier allongé 4 ayant la forme d'un stylo ou d'un crayon (partiellement représenté sur la figure 1) et logeant l'équipement optoélectronique qui lui permet de fonctionner. Pour la commodité de la représentation, cet équipement est schématisé à la fois à l'intérieur et à l'extérieur du boîtier 4, étant entendu que le tout peut y être enfermé. Selon une variante toutefois, il est également possible de prévoir une partie des circuits électroniques dans l'ordinateur 2. Le photostyle 1 peut également comprendre une source d'énergie autonome sous forme d'une pile (non représentée), par exemple.

L'extrémité avant du photostyle comprend une lentille de focalisation 5 derrière laquelle sont placés une photodiode 6, émettrice de lumière, et un capteur photosensible 7, la photodiode 6 étant agencée de telle manière qu'elle puisse éclairer une zone d'acquisition $Z_k$ donnée de l'image A, lorsque le photostyle se trouve près du support B. La photodiode 6 et le capteur photosensible 7 sont représentés à la fois dans et hors du boîtier 4.

Outre le capteur photosensible 7, la partie électronique du photostyle 1 selon l'invention comprend un circuit de corrélation 8, une mémoire RAM 9 pour mémoriser temporairement des données d'image qui lui sont envoyées par le capteur photosensible 7 et un microcontrôleur 10 programmé pour gérer et coordonner le fonctionnement du photostyle 1. Les unités 7 à 10 communiquent entre elles par l'intermédiaire d'un bus bidirectionnel 11.

Dans le mode de réalisation préféré de l'invention, le capteur photosensible 7 est formé par une matrice d'éléments photosensibles (ou pixels) 12 formant une rétine artificielle 13 (figure 2). Le schéma équivalent de cette rétine artificielle 13 peut être celui représenté dans le rectangle 7 sur la figure 1. Pour le besoin de la compréhension, on peut considérer que la matrice d'éléments photosensibles 12 comprend une source de courant 14 générant un courant 1 qui est une fonction de la quantité de lumière qui frappe la matrice et que ce courant charge une capacité 15 à une tension $V_c$ de la forme:

$$V_c = I*t*C^{-1}$$

dans laquelle t est le temps d'intégration et C la valeur de la capacité 15.

Ce signal représenté par la tension $V_c$ (appelé ci-après "signal d'image") est engendré périodiquement par le capteur 7 et résulte du temps d'exposition à la lumière des éléments photosensibles individuels 12. Selon une caractéristique importante de l'invention, la longueur de l'intervalle séparant l'apparition de deux signaux d'image successifs est variable selon l'état de fonctionnement dans lequel se trouve le photostyle 1.

Afin de pouvoir déterminer l'instant de transition entre l'état de veille et l'état actif du photostyle selon l'invention, le microcontrôleur 10 est programmé de manière à pouvoir assurer notamment, des fonctionnalités d'analyse, de détection et de commande.

La fonction d'analyse du microcontrôleur 10 consiste à engendrer, à partir de la succession de signaux d'image $V_c$, une succession de signaux dits "de paramètre" qui représentent un paramètre global, chaque signal de paramètre caractérisant une zone d'acquisition $Z_k$ vues successivement par le photostyle 1.

Dans le mode de réalisation présentement décrit, le paramètre représentatif est ce que l'on désigne par "centre de gravité" $GC_k$ de l'image de chaque zone $Z_k$. On entend par "centre de gravité" ou "centre d'activité" d'une matrice d'éléments photosensibles ou pixels formant une rétine artificielle, le point matérialisé par le pixel où, à un instant donné, est concentrée l'activité globale de la matrice, cette activité globale représentant alors l'activité distribuée dans la matrice.

Ainsi, le microcontrôleur 10 est doté de moyens permettant de calculer les centres de gravité $GC_k$, chaque fois qu'un signal d'image $V_c$ est engendré, k étant l'indice des signaux de paramètre successivement engendrés.

La fonction de détection du microcontrôleur 10 consiste, pendant la phase de veille du photostyle 1, à surveiller une évolution dans le temps des signaux de paramètre successifs $GC_k$ qu'il aura déterminé.

Il est à noter que les signaux de paramètre peuvent également caractériser d'autres propriétés des images des zones d'acquisition $Z_k$ vues successivement par le photostyle 1.

Par ailleurs, on comprend que la transition entre l'état de veille et l'état actif du photostyle 1 doit intervenir, lorsque l'utilisateur, après l'avoir rapproché du support B amorce un mouvement de balayage provoquant une modification du contenu informatif de la zone d'acquisition vue par le photostyle. En d'autres termes, dans le cadre du mode de réalisation préféré de l'invention, il faut changer d'état de fonctionnement du photostyle, lorsqu'il est constaté que le centre de gravité $GC_k$ lié à un pixel donné de la rétine artificielle 13 et calculé pour une zone d'acquisition actuelle $Z_k$ vue par le photostyle, se transfère vers un pixel voisin de la rétine qui correspondra alors à un centre de gravité $G_{k+1}$ calculé pour une zone d'acquisition suivante $Z_{k+1}$ de l'image, étant entendu naturellement que les zones $Z_k$ et $Z_{k+1}$ se chevaucheront partiellement.

Le microcontrôleur 1O est programmé pour constater ce "déplacement" du centre de gravité. En outre, selon une autre caractéristique de l'invention, le microcontrôleur 10 mesure de préférence également la "vitesse de déplacement" du centre de gravité dans la rétine 13 et opère la transition entre l'état de veille et l'état actif du photostyle si la vitesse de déplacement du centre de gravité dépasse une limite prescrite. Ceci revient à dire que le microcontrôleur 1O commande la transition si à l'intérieur d'un intervalle de temps de référence $T_{r1}$ le centre de gravité s'est déplacé d'un nombre de pixels donné, quatre pixels étant une valeur préférable dans ce cas. La référence temporelle $T_{r1}$ fixée par le microcontrôleur 10 est symbolisée sur la figure 1 par le rectangle 16a.

Le concept de surveillance du déplacement du centre de gravité $GC_k$ est illustré sur la figure 2 dans laquelle la flèche F indique le sens de balayage de l'image par le photostyle 1, les damiers P1 et P2 représentent la matrice 13 de pixels 12 à deux instants successifs du début du balayage et les traits $L_{k-1}$ et $L_k$ illustrent le déplacement du "centre de gravité" entre deux prises d'images par le photostyle. On voit que le centre de gravité s'est déplacé sur quatre pixels contigus. Si ce déplacement s'est effectué dans la limite de la référence temporelle $T_{r1}$, le microcontrôleur 1O décidera de commander la transition entre l'état de veille et l'état actif du photostyle 1.

Selon une autre caractéristique avantageuse de l'invention, la transition ainsi commandée par le microcontrôleur 10, non seulement se traduit par la mise sous tension de l'ensemble des circuits du photostyle 1, mais elle correspond également à un changement de l'éclairement qui est assuré par la photodiode 6 de la zone d'acquisition $Z_k$ du support d'image B.

A cet effet, la photodiode 6 est avantageusement alimentée par un courant impulsionnel et dans ce cas le changement de l'éclairement peut être provoqué par une augmentation de la fréquence des impulsions de ce courant d'alimentation. Cette fréquence peut passer de 40 Hz à 500 Hz, par exemple. Le microcontrôleur 10 peut commander le changement d'éclairement de la zone d'acquisition $Z_k$ en écrivant dans un registre (non représenté) de la rétine 13 et informer ainsi de manière simple l'utilisateur que le photostyle a commencé l'acquisition de l'information d'image inscrite sur le support B, les fréquences d'éclairement étant perçues comme une lumière respectivement pale et intense au niveau de la zone d'acquisition $Z_k$.

Selon une autre caractéristique de l'invention, les fréquences indiquées ci-dessus sont de préférence également celles à laquelle le photostyle 1 acquiert des signaux d'image successifs respectivement dans l'état de veille et dans l'état actif du photostyle 1.

Selon encore une autre caractéristique avantageuse de l'invention, le photostyle 1 est agencé pour lorsqu'il est en état de veille, faire la discrimination entre une première phase de fonctionnement (état inactif) dans laquelle il est encore éloigné du support d'image B et une seconde phase de fonctionnement (état d'attente) dans laquelle il est suffisamment près pour que le processus de transition entre l'état de veille et l'état actif tel qu'il vient d'être décrit, puisse commencer.

Pour mettre en oeuvre cette caractéristique, l'invention profite de la propriété des rétines artificielles du genre indiqué et représenté, quant à leur schéma équivalent, dans le rectangle 7 de la figure 1, de créer un signal d'image d'autant plus rapidement qu'elles reçoivent plus de lumière. En d'autres termes, le microcontrôleur 10 est programmé pour analyser la vitesse de croissance du signal d'image $V_c$ produit par le capteur 7 et pour confronter cette vitesse de croissance à des références temporelles prédéterminées.

C'est pourquoi le microcontrôleur 10 est agencé pour fournir des seconde et troisième références temporettes, $T_{r2}$ et $T_{r3}$ respectivement, symbolisées par les rectangles 16b et 16c sur la figure 1.

La seconde référence temporelle $T_{r2}$ est utilisée pendant la première phase de fonctionnement de l'état de veille pendant laquelle le photostyle 1 est encore éloigné du support B, mais va être rapproché par l'utilisateur de celui-ci si ce dernier veut l'explorer. Dans cet état inactif, le capteur 7 est commandé de manière à acquérir des signaux d'image $V_c$ à une faible fréquence qui peut être de une toutes les secondes par exemple. La vitesse d'acquisition ou de croissance du signal d'image $V_c$ est alors lente. Le microcontrôleur 10 est agencé pour comparer le signal représentatif $V_c$ à une tension de seuil $V_{th}$ (figure 3A). Si, par le rapprochement progressif du photostyle 1 du support B, la quantité de lumière perçue par le capteur 7 devient plus grande, l'intervalle de temps de croissance $T_{cr}$ pendant lequel la tension $V_c$ atteint périodiquement la tension de seuil $V_{th}$ devient de plus en plus faible et finit par être égal, voire inférieur à la référence temporelle $T_{r2}$. Dans ces conditions, le microcontrôleur 10 fait passer le photostyle 1 de la première phase de fonctionnement de l'état de veille à la seconde phase de fonctionnement de ce dernier. Pendant cette transition, la fréquence d'acquisition du signal d'image $V_c$ augmente de la faible valeur (1 Hz par exemple) à une fréquence moyenne (40 Hz, par exemple).

Par ailleurs, avantageusement, la fréquence des impulsions du courant d'alimentation de la photodiode 6 est modifiée d'une valeur faible à une valeur moyenne, ces valeurs étant de préférence celles des fréquences auxquelles les signaux d'image $V_c$ sont acquis dans les deux phases de fonctionnement de l'état de veille. Ainsi, alors que dans la première phase de fonctionnement de l'état de veille, le photostyle 1 fournit un éclairement clignotant, pendant la deuxième phase de fonctionnement cet éclairement devient plus fort et peut revenir à une lueur perçue comme étant un éclairement faible par l'utilisateur. Ce dernier reçoit donc une information claire du moment où le photostyle transite de la première à la deuxième phase de fonctionnement. Dans l'exemple de réalisation décrit, l'éclairement faible de la deuxième phase de fonctionnement est celui qui est utilisé avant la transition entre l'état de veille et l'état actif du photostyle.

Pendant la deuxième phase de fonctionnement, le photostyle est dans une position rapprochée par rapport au support B. Tant que l'utilisateur maintient le photostyle immobile, le microcontrôleur 10 surveille le signal d'image $V_c$ en le comparant à la tension de seuil $V_{th}$. Simultanément, il confronte l'intervalle de temps de croissance $T_{rc}$ que prend le signal d'image $V_c$ pour atteindre cette tension de seuil $V_{th}$, à la troisième référence temporelle $T_{r3}$ (figure 3B). Si cet intervalle $T_{rc}$ demeure supérieur à cette référence $T_{r3}$, le microcontrôleur 10 fait retourner le photostyle dans la première phase de fonctionnement.

On comprend que la troisième référence temporelle $T_{r3}$ est très inférieure en durée à la deuxième référence temporelle $T_{r2}$, car dans la deuxième phase de fonctionnement de l'état de veille, la fréquence d'acquisition du signal d'image $V_c$ est nettement plus élevée que pendant la première phase de fonctionnement (typiquement 40 Hz et 1 Hz, respectivement) et en outre la quantité de lumière perçue par le capteur 7 est nettement plus élevée.

En revanche dès que l'intervalle de temps $T_{cr}$ devient inférieur à la troisième référence temporelle $T_{r3}$, le microcontrôleur 1O met en oeuvre l'examen du centre de gravité $GC_k$ de l'information d'image prise pour, le cas échéant, déceler un mouvement du photostyle 1 par rapport au support B et opérer la transition entre l'état de veille et l'état actif, comme cela a été décrit plus haut.

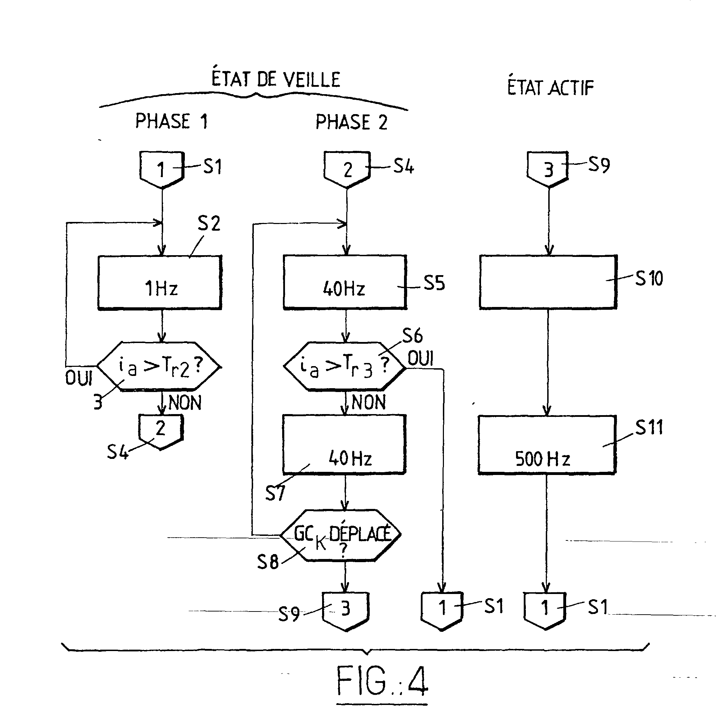

La figure 4 rappelle par un organigramme très simplifié le processus qui vient d'être décrit.

En S1, le photostyle est placé dans la phase 1 de l'état de veille par mise sous tension des seuls circuits qui doivent être actifs pendant cet état.

En S2, le photostyle 1, sous la commande du microcontrôleur 10 exécute des acquisitions de signaux d'image $V_c$ à un rythme de 1 Hz, la photodiode 6 clignotant au même rythme. Pendant le test S3, le microcontrôleur 1O compare le signal d'image $V_c$ à la tension de seuil $V_{th}$ et l'intervalle de temps de croissance T à la référence temporelle $T_{r2}$. Tant que le photostyle 1 reste éloigné du support d'image B, le test S3 reçoit une réponse positive et l'opération d'acquisition en S2 est répétée.

En revanche, lorsque l'intervalle $T_{rc}$ devient inférieur à la référence $T_{r2}$, le programme passe à une opération de transition en S4 qui initie la deuxième phase de fonctionnement de l'état de veille du photostyle 1. Cela veut dire que l'utilisateur a rapproché suffisamment le photostyle 1 du support d'image B et qu'il s'apprête à balayer les éléments d'image A.

Au cours du processus de transition en S4, le microcontrôleur 10 modifie la fréquence d'acquisition des signaux d'image $V_c$ (de 1 Hz à 40 Hz dans l'exemple) et alimente à la même fréquence la photodiode 6. La lueur répandue par le photostyle 1 sur le support d'image B est pale.

En S5, le programme procède désormais de nouveau à l'acquisition de signaux d'image $V_c$ à un rythme de 4O Hz pendant que la photodiode 6 est alimentée à la même fréquence.

En S6, l'intervalle de croissance $T_{rc}$ est comparé à la référence $T_{r3}$ et s'il est constaté qu'il est supérieur à la référence, le programme retourne à la phase 1. En revanche, s'il devient inférieur à la référence, le microcontrôleur 10 opère en S7 la mesure du déplacement du centre de gravité $GC_k$.

Le programme procède alors aux acquisitions des signaux d'image $V_c$, à un rythme de 40 Hz dans l'exemple, et en S8, il effectue le test de déplacement du centre de gravité $GC_k$ pour que le début du balayage puisse être décelé de la façon indiquée ci-dessus en détail. Si le centre de gravité $GC_k$ ne se déplace pas assez vite, sur un nombre de pixels prédéterminé du capteur 7, la réponse au test S8 sera négative et le programme retourne à l'étape S5.

Si en revanche le début du balayage est détecté, la transition entre l'état de veille et l'état actif est opérée en S9. Pendant cette transition, la fréquence d'acquisition des signaux d'image $V_c$ devient égale à 500 Hz et la photodiode 6 va être alimentée à la même fréquence. L'éclairement de la zone d'acquisition $Z_k$ devient intense, ce qui signale que le photostyle est prêt à balayer le support d'image B.

En S10, tous les circuits du photostyle 1 sont rendus actifs pour qu'en S11, l'analyse des éléments d'image puisse être effectuée, toute la puissance de calcul du microcontrôleur 10 étant alors mobilisée pour cette analyse.

Pendant l'étape S11, le programme teste en permanence le degré de pertinence de l'information acquise. Tant que l'information demeure pertinente, le programme maintient le photostyle dans le mode d'acquisition, à 500 Hz dans l'exemple. Sinon, le programme retourne à l'opération S1 de la première phase de fonctionnement en veille.

**Revendications**

1. Photostyle (1) destiné à la saisie numérique par balayage manuel d'éléments d'image (A), tels que des signes alphanumériques, inscrits sur un support d'image (B), ce photostyle, **caractérisé en ce qu'il** comprend:

   - un capteur (7, 13) composé d'une pluralité d'éléments photosensibles (12) dont chacun est destiné à engendrer un signal électrique, ledit capteur comprenant des moyens de corrélation (8) qui, lorsque le photostyle est tenu au voisinage dudit support d'image (B), engendrent périodiquement un signal d'image ($V_c$) résultant d'une corrélation entre les signaux électriques engendrés par lesdits éléments photosensibles (12), ledit signal d'image ($V_c$) étant ainsi représentatif de la lumière dégagée par une zone d'acquisition ($Z_k$) dudit support d'image (B) vue instantanément par ledit capteur (7, 13),
   - des moyens d'analyse (10) des signaux d'image ($V_c$) pour engendrer une succession de signaux de paramètre ($GC_k$) représentatifs d'un paramètre global caractérisant chacune des zones d'acquisition ($Z_k$) vues successivement,
   - des moyens de détection (10) pour, pendant un état de veille dudit photostyle, détecter une évolution dans le temps desdits signaux de paramètre successifs (GCk),
   - et des moyens de commande (10) pour opérer la transition entre ledit état de veille et un état actif du photostyle, lorsque l'évolution dans le temps desdits signaux de paramètre ($GC_k$) satisfait à un critère prédéterminé.

2. Photostyle suivant la revendication 1, **caractérisé en ce que** lesdits moyens (10) d'analyse des signaux d'image ($V_c$) sont agencés pour engendrer chaque signal de paramètre ($GC_k$) sous la forme du centre de gravité de l'information lumineuse de la zone d'acquisition ($Z_k$) du support d'image (B) correspondant au signal de paramètre considéré.

3. Photostyle suivant la revendication 2, **caractérisé en ce que** ledit capteur est une rétine artificielle (13) dont les éléments photosensibles (12) sont agencés selon une matrice et **en ce que** lesdits moyens de commande (10) sont agencés pour commander ladite transition lorsque l'évolution desdits signaux de paramètre ($GC_k$) correspond à un déplacement dudit centre de gravité dans ladite matrice sur un nombre prédéterminé d'éléments photosensibles (12).

4. Photostyle suivant la revendication 3, **caractérisé en ce que** lesdits moyens de commande (10) sont également agencés pour opérer ladite transition, lorsque la vitesse de déplacement dudit centre de gravité dépasse une limite prédéterminée.

**5.** Photostyle suivant l'une quelconque des revendications 1 à 4, **caractérisé en ce que** lesdits moyens de commande (10) sont également agencés pour modifier la fréquence de génération desdits signaux d'image ($V_c$) dans le sens d'une augmentation au passage dudit état de veille audit état actif et dans le sens d'une réduction dans lors du passage inverse.

**6.** Photostyle suivant l'une quelconque des revendications précédentes, **caractérisé en ce qu'**il comporte également une source lumineuse (6) pour éclairer ladite zone d'acquisition ($Z_k$) dudit support d'image (B) et lesdits moyens de commande (10) sont également agencés pour augmenter l'intensité lumineuse de ladite source lumineuse (6) lors des passages de l'état de veille à l'état actif et réduire cette intensité dans le cas des passages inverses.

**7.** Photostyle suivant l'une quelconque des revendications 1 à 6, **caractérisé en ce que** lesdits moyens de commande sont également agencés pour, pendant ledit état de veille, discriminer entre des première et seconde phases de fonctionnement, en fonction de la distance séparant le photostyle (1) dudit support d'image (B).

**8.** Photostyle suivant la revendication 7, lorsqu'elle dépend de la revendication 1, **caractérisé en ce que** ledit capteur (7, 13) est une rétine artificielle dont les signaux d'image périodiques ($V_c$) sont croissants en fonction du temps et lesdits moyens de commande (10) sont également agencés pour mesurer la vitesse de croissance dudit signal d'image et pour en fonction du résultat de cette mesure, opérer la transition entre lesdites première et seconde phases de fonctionnement.

**9.** Photostyle suivant la revendication 8, **caractérisé en ce qu'**il comporte également une source lumineuse (6) pour éclairer ladite zone d'acquisition ($Z_k$) dudit support d'image (B) et lesdits moyens de commande (10) sont également agencés pour augmenter l'intensité lumineuse de ladite source lumineuse (6), lors des passages de la première phase de fonctionnement à la seconde et réduire cette intensité dans le cas des passages inverses.

**Patentansprüche**

**1.** Lichtgriffel (1) zum digitalen Erfassen von Bildelementen (A) durch Abtasten per Hand, zum Beispiel von alphanumerischen Zeichen, die sich auf einem Bilduntergrund (B) befinden, wobei der Lichtgriffel **dadurch gekennzeichnet ist, dass** er Folgendes umfasst:

einen Messfühler (7, 13), der aus einer Vielzahl von lichtempfindlichen Elementen (12) besteht, von denen jedes ein elektrisches Signal erzeugen soll, wobei der Messfühler Korrelationsmittel (8) umfasst, die, wenn der Lichtgriffel in der Nähe des Bilduntergrunds (B) gehalten wird, in regelmäßigen Abständen ein Bildsignal ($V_c$) erzeugen, das aus einer Korrelation zwischen den elektrischen Signalen entsteht, die durch die lichtempfindlichen Elemente (12) erzeugt werden, wobei das Bildsignal ($V_c$) kennzeichnend für das Licht ist, das von einem Erfassungsbereich ($Z_k$) des Bilduntergrunds (B) abgegeben und unverzüglich von dem Messfühler (7, 13) erfasst wird,

Analysemittel (10) für die Bildsignale ($V_c$) zum Erzeugen einer Folge von Parametersignalen ($GC_k$), die kennzeichnend für einen globalen Kennwert sind, wobei jede Folge Erfassungsbereiche ($Z_k$) kennzeichnet, die nacheinander erfasst werden,

Nachweismittel (10) zum Nachweisen einer zeitlichen Entwicklung der aufeinander folgenden Parametersignale ($GC_k$) während eines Schlafzustands des Lichtgriffels,

und Steuermittel (10) zum Bewirken des Übergangs zwischen dem Schlafzustand und einem aktiven Zustand des Lichtgriffels, wenn die zeitliche Entwicklung der Parametersignale ($GC_k$) ein vorgegebenes Merkmal erfüllt.

**2.** Lichtgriffel nach Anspruch 1, **dadurch gekennzeichnet, dass** die Analysemittel (10) für die Bildsignale ($V_c$) so ausgestaltet sind, dass sie jedes Parametersignal ($GC_k$) in Form des Schwerpunkts der Lichtinformation des Erfassungsbereichs ($Z_k$) des Bilduntergrunds (B) erzeugen, der dem betrachteten Parametersignal entspricht.

**3.** Lichtgriffel nach Anspruch 2, **dadurch gekennzeichnet, dass** der Messfühler eine künstliche Netzhaut (13) ist, deren lichtempfindliche Elemente (12) in einer Matrix angeordnet sind und dadurch, dass die Steuermittel (10) so ausgestaltet sind, dass sie den Übergang steuern, wenn die Entwicklung der Parametersignale ($GC_k$) einer Verschiebung des Schwerpunkts in der Matrix über eine vorgegebene Anzahl von lichtempfindlichen Elementen (12) entspricht.

**4.** Lichtgriffel nach Anspruch 3, **dadurch gekennzeichnet, dass** die Steuermittel (10) auch so ausgestaltet sind, dass sie den Übergang bewirken, wenn die Geschwindigkeit der Verschiebung des Schwerpunkts eine vorgegebene Grenze überschreitet.

5. Lichtgriffel nach einem der Ansprüche 1 bis 4, **dadurch gekennzeichnet, dass** die Steuermittel (10) auch so ausgestaltet sind, dass sie die Frequenz zum Erzeugen der Bildsignale ($V_c$) beim Übergang vom Schlafzustand in den aktiven Zustand im Sinne einer Erhöhung ändern und beim Übergang in umgekehrter Richtung im Sinne einer Verringerung ändern.

6. Lichtgriffel nach einem der vorhergehenden Ansprüche, **dadurch gekennzeichnet, dass** er auch eine Lichtquelle (6) umfasst, um den Erfassungsbereich ($Z_k$) des Bilduntergrunds (B) zu beleuchten und die Steuermittel (10) auch so ausgestaltet sind, dass sie die Lichtstärke der Lichtquelle (6) beim Übergang vom Schlafzustand in den aktiven Zustand erhöhen und die Lichtstärke beim Übergang in umgekehrter Richtung verringern.

7. Lichtgriffel nach einem der Ansprüche 1 bis 6, **dadurch gekennzeichnet, dass** die Steuermittel auch so ausgestaltet sind, dass sie während des Schlafzustands zwischen der ersten und zweiten Arbeitsphase unterscheiden, in Abhängigkeit von dem Abstand zwischen dem Lichtgriffel (1) und dem Bilduntergrund (B).

8. Lichtgriffel nach Anspruch 7, sofern er von Anspruch 1 abhängt, **dadurch gekennzeichnet, dass** der Messfühler (7, 13) eine künstliche Netzhaut ist, deren regelmäßig wiederkehrende Bildsignale ($V_c$) in Abhängigkeit von der Zeit wachsen und die Steuermittel (10) auch so ausgestaltet sind, dass sie die Wachstumsgeschwindigkeit des Bildsignals messen und in Abhängigkeit von dem Ergebnis dieser Messung den Übergang zwischen der ersten und zweiten Arbeitsphase bewirken.

9. Lichtgriffel nach Anspruch 8, **dadurch gekennzeichnet, dass** er auch eine Lichtquelle (6) umfasst, um den Erfassungsbereich ($Z_k$) des Bilduntergrunds (B) zu beleuchten und die Steuermittel (10) auch so ausgestaltet sind, dass sie die Lichtstärke der Lichtquelle (6) beim Übergang von der ersten Arbeitsphase in die zweite erhöhen und die Lichtstärke beim Übergang in umgekehrter Richtung verringern.

**Claims**

1. Light pen (1) for digital input by manual scanning of image elements (A), such as alphanumerical signs, inscribed on an image support (B), said light pen being **characterized in that** it comprises:

- a sensor (7, 13) comprising a plurality of photosensitive elements (12), each of which is adapted to generate an electrical signal, and correlation means (8) which, when the light pen is held in the vicinity of said image support (B), periodically generate an image signal ($V_c$) resulting from the correlation between the electrical signals generated by said photosensitive elements (12), said image signal ($V_c$) therefore being representative of the light given off by an acquisition area ($Z_k$) of said image support (B) viewed instantaneously by said sensor (7, 13),
- means (10) for analyzing the image signals ($V_c$) to generate a succession of parameter signals ($GC_k$) representative of a global parameter and each characterizing successively viewed acquisition areas ($Z_k$),
- detection means (10) for detecting evolution in time of said successive parameter signals ($GC_k$) during a standby state of said light pen, and
- control means (10) for effecting the transition between said standby state and an active state of the light pen if the evolution in time of said parameter signals ($GC_k$) satisfies a predetermined criterion.

2. Light pen according to claim 1, **characterized in that** said means (10) for analyzing the image signals ($V_c$) are adapted to generate each parameter signal ($GC_k$) in the form of the center of gravity of the luminous information from the acquisition area ($Z_k$) of the image support (B) corresponding to the parameter signal concerned.

3. Light pen according to claim 2, **characterized in that** said sensor is an artificial retina (13) whose photosensitive elements (12) are arranged in a matrix and **in that** said control means (10) are adapted to command said transition if the evolution of said parameter signals ($GC_k$) corresponds to a displacement of said center of gravity over a predetermined number of photosensitive elements (12) in said matrix.

4. Light pen according to claim 3, **characterized in that** said control means (10) are also adapted to effect said transition if the speed of displacement of said center of gravity exceeds a predetermined limit.

5. Light pen according to any one of claims 1 to 4, **characterized in that** said control means (10) are also adapted to modify the frequency of generation of said image signals ($V_c$) in the direction of an increase on the transition from said standby state to said active state and in the direction of a reduction on the reverse transition.

6. Light pen according to any preceding claim, **characterized in that** it also comprises a light source (6) for illuminating said acquisition area ($Z_k$) of said image support (B) and said control means (10) are also adapted to increase the luminous intensity of said light source (6) on the transition from the standby state to the active state and to reduce that intensity on the reverse transition.

7. Light pen according to any one of claims 1 to 6, **characterized in that** said control means are also adapted, during said standby state, to discriminate between first and second phases of operation as a function of the distance between the light pen (1) and said image support (B).

8. Light pen according to claim 7 when dependent on claim 1, **characterized in that** said sensor (7, 13) is an artificial retina whose periodic image signals ($V_c$) are an increasing function of time and said control means (10) are also adapted to measure the rate of increase of said image signal and to effect the transition between said first and second phases of operation as a function of the result of that measurement.

9. Light pen according to claim 8, **characterized in that** it further comprises a light source (6) for illuminating said acquisition area ($Z_k$) of said image support (B) and said control means (10) are also adapted to increase the luminous intensity of said light source (6) on the transition from the first phase of operation to the second and to reduce that intensity on the reverse transition.

$I = f(\text{lumière})$

$V_C = I \times t \times C^{-1}$

FIG.:1

FIG.:3A

FIG.:3B

FIG.:2

FIG.:4